# EUROPÄISCHE PATENTSCHRIFT

(11) **EP 2 149 164 B1**
(45) Veröffentlichungstag und Bekanntmachung des Hinweises auf die Patenterteilung: **30.03.2011**
(21) Anmeldenummer: 08736489.9
(22) Anmeldetag: 23.04.2008
(51) Int. Cl.: H01L 41/09

(54) **ELEKTROMECHANISCHER MOTOR, INSBESONDERE PIEZOELEKTRISCHER MIKROSCHRITTANTRIEB**
ELECTROMECHANICAL MOTOR, ESPECIALLY PIEZOELECTRIC MICROSTEPPER DRIVE
MOTEUR ÉLECTROMÉCANIQUE, NOTAMMENT MOTEUR PAS À PAS PIÉZOÉLECTRIQUE

(30) Priorität: 18.05.2007 DE 102007023217
(43) Veröffentlichungstag der Anmeldung: 03.02.2010
(73) Patentinhaber: Continental Automotive GmbH, 30165 Hannover (DE)
(72) Erfinder: BLUME, Heinrich-Jochen, 64291 Darmstadt (DE); GOTTLIEB, Bernhard, 81739 München (DE); KAPPEL, Andreas, 85649 Brunnthal (DE); KISSEL, Robert Wolfgang, 63329 Egelsbach (DE); MITTENBÜHLER, Karl-Heinz, 64347 Griesheim (DE); SCHWEBEL, Tim, 80337 München (DE); WALLENHAUER, Carsten, 01987 Schwarzheide (DE)
(86) Internationale Anmeldenummer: PCT/EP2008/054909
(87) Internationale Veröffentlichungsnummer: WO 2008/141886

(56) Entgegenhaltungen:
- EP-A- 1 098 429
- WO-A-97/20354
- DE-A1- 3 719 362
- US-A- 5 079 471
- US-A1- 2005 140 317
- YAO ET AL: "Design, analysis, fabrication and testing of a parallel-kinematic micropositioning XY stage" INTERNATIONAL JOURNAL OF MACHINE TOOL DESIGN AND RESEARCH, PERGAMON PRESS, OXFORD, GB, Bd. 47, Nr. 6, 9. Februar 2007 (2007-02-09), Seiten 946-961, XP005878055 ISSN: 0020-7357

## Beschreibung

Die vorliegende Erfindung betrifft einen elektromechanischen Motor, insbesondere einen piezoelektrischen Stellantrieb.

Das Cockpit eines Kraftfahrzeugs versucht ein optimales Zusammenspiel von Design und Technik zu realisieren. Im Blickfeld des Fahrers liegen dabei verschiedene Zeigerinstrumente. Diese Zeigerinstrumente müssen sowohl unterschiedlichen technischen Anforderungen genügen als auch einen konkurrenzfähigen Preis für die Massenproduktion von Kraftfahrzeugen besitzen. Ein Beispiel für ein derartiges Zeigerinstrument ist das "Messwerk 2000" der Firma Siemens VDO.

Das "Messwerk 2000" basiert auf einem mit einem einstufigen Schneckenradgetriebe untersetzten Schrittmotorantrieb. Der vierpolige Schrittmotor wird durch zwei um 90° im Phasenwinkel zueinander phasenverschobene sinusartige Spulenstromverläufe als Funktion der Zeit angesteuert. Das Vorzeichen der Phasenverschiebung bestimmt die Drehrichtung und die Frequenz die Drehgeschwindigkeit der Motorwelle. Im Rahmen einer vollen Periode von 360° der sinusartigen Stromverläufe können bis zu 128 Zwischenstufen reproduzierbar eingestellt werden. Die Nutzung dieser Zwischenstufen wird als Mikroschrittbetrieb bezeichnet.

Ein kompletter Stellantrieb "Messwerk 2000", der den oben charakterisierten Schrittmotor beinhaltet, besteht aus zwölf Einzelteilen. Der Schrittmotor selbst setzt sich aus zwei Spulen mit einem gemeinsamen Statorblech und einem Permanentmagnetrotor zusammen. Hinsichtlich der Bauteilkosten schlagen die Spulen und der Permanentmagnet am stärksten zu Buche. Entscheidend für den Preis sind neben den Materialkosten ebenfalls die Herstellungskosten, die näherungsweise proportional zur Anzahl der Komponenten des Stellantriebs zunehmen. Aus der EP 1 098 429 B1 ist ein nach einem neuen Motorprinzip, das heißt ohne rotierende Spulen, arbeitender elektromechanischer Motor bekannt, bei dem während des Betriebs durch eine zeitlich versetzte Betätigung von mindestens zwei elektromechanischen Antriebselementen ein Antriebsring umlaufend verschoben wird, so dass durch einen unmittelbaren Kraftübertrag vom Antriebsring auf die - insbesondere innerhalb des Antriebsrings befindliche - Welle diese gedreht wird. Die umlaufenden Verschiebebewegungen des Antriebsrings können durch einen z. B. piezoelektrisch, magnetostriktiv, elektrostriktiv oder elektrodynamisch angetriebenen Aktor hervorgerufen werden, so dass ein hinsichtlich der Materialkosten und Herstellungskosten besser für die Massenproduktion geeigneter Stellantrieb resultiert. Die Piezoaktoren werden so am Antriebsring angebracht, dass ihr jeweiliger Hub radial auf den Antriebsring wirkt, wobei gegebenenfalls noch weitere Maßnahmen ergriffen werden, um eine möglichst symmetrische Krafteinleitung auf den Antriebsring zu erreichen.

Unter den zuletzt genannten technischen Umständen ergibt sich zwar ein hinsichtlich der Funktion optimierter Antrieb mit besten Gleichlaufeigenschaften (Konstanz der Drehgeschwindigkeit unabhängig von der momentanen Stellung der Welle) ohne Drehmomentschwankungen. Insbesondere die Längserstreckung und die radiale Anordnung der Biegeaktoren bringt es dabei jedoch mit sich, dass die ebenen Antriebsvarianten einen erheblichen Platzbedarf in der Ebene erfordern und zumeist wenig kompakt erscheinen. Kompakte ebene Antriebe werden aber aufgrund der in Cockpitinstrumenten vorgegebenen sehr beengten Bauraumverhältnisse dringend benötigt.

Weitere Motoren sind aus US 5 079 471 und WO 97 / 20354 A1 bekannt.

Die Aufgabe der vorliegenden Erfindung besteht darin, einen hinsichtlich Teilezahl, Fertigungsaufwand, Bauraumbedarf und Funktionalität optimierten Schrittantrieb, insbesondere einen Kleinstellantrieb für Messwerke von Cockpitinstrumenten, bereitzustellen.

Diese Aufgabe wird durch einen elektromechanischen Motor, insbesondere einen piezoelektrischen Mikroschrittmotor, gemäß Patentanspruch 1 gelöst. Vorteilhafte Ausgestaltungen und Weiterentwicklungen der vorliegenden Erfindung gehen aus der folgenden Beschreibung, den Zeichnungen und den abhängigen Ansprüchen hervor.

Der erfindungsgemäße elektromechanische Schrittantrieb weist die folgenden Merkmale auf:
Zwei elektromechanische, vorzugsweise piezoelektrische, Antriebselemente (Aktoren), die annähernd senkrecht zueinander ausgerichtete Wirkrichtungen aufweisen, und eine in einem Antriebsring derart drehbar gelagerte Welle, dass der Antriebsring durch eine Auslenkung der piezoelektrischen Antriebselemente in die jeweilige Wirkrichtung zu einer unmittelbar auf die Welle übertragbaren Verschiebebewegung anregbar ist, so dass die Welle im Antriebsring abrollt und dadurch rotiert. Weiterhin ist der Antriebsring mittels zweier zueinander und zu einer der beiden Wirkrichtungen parallelen Zug-Druckstäbe, die jeweils zu ihren beiden Enden hin jeweils ein Gelenk aufweisen, an die Enden eines Diagonalstabes angebunden ist, so dass der Antriebsring relativ zum Diagonalstab in Form einer Scherung in die andere, also zu den beiden Zug-Druckstäben senkrechte, Wirkrichtung verschiebbar ist. Außerdem sind die diametral gegenüberliegenden Enden des sich mindestens abschnittsweise schräg zu den beiden Wirkrichtungen erstreckenden Diagonalstabes jeweils mittels eines zu der anderen Wirkrichtung parallelen Zug-Druckstabs, der zu seinen beiden Enden hin jeweils ein Gelenk aufweist, an jeweils ein Fixierelement angebunden, wobei das Fixierelement des einen Stabes und die Anbindungsstelle des anderen Stabes an den Diagonalstab - und umgekehrt - einander jeweils in etwa entlang einer Parallele zu der einen Wirkrichtung gegenüberliegen, so dass der Diagonalstab relativ zu den Fixierelementen in die eine Wirkrichtung verschiebbar ist.

Die erfindungsgemäße Ringaufhängung kombiniert eine (den Antriebsring teilweise umrahmende) Parallelaufhängung für die eine der beiden Wirkrichtungen mit einer Diagonalaufhängung für die andere, zur ersten senkrechte, Wirkrichtung und ermöglicht aufgrund der spezifischen, gelenkigen Anbindung ihrer Elemente bzw. Teile relativ zueinander die gewünschte Kinematik. Als Konsequenz aus der Struktur der Anbindung des Antriebsringes an den Diagonalstab in Kombination mit der Struktur der Anbindung des Diagonalstabes an ein Gehäuse oder damit mechanisch steif verbundene Teile ist der Antriebsring relativ zum Gehäuse in der x-y-Ebene nahezu kräftefrei in jede Richtung verschiebbar, aber torsionssteif gelagert. Die Gesamtstruktur wird hier als Tangentialkinematik bezeichnet. Als besonders bemerkenswert wird der stringent planare Aufbau der erfindungsgemäßen Ringaufhängung beziehungsweise x-y-Kinematik angesehen, der auf parallel zur Ebene des Antriebsringes anzuordnende Elemente, wie zum Beispiel Abstandshalter, verzichten kann.

Jedes am Antriebsring angreifende Drehmoment wird durch die Tangentialkinematik an das Gehäuse übertragen, ohne dass dabei der Ring nennenswert rotiert wird. Infolgedessen muss, im Gegensatz zum Stand der Technik, nicht mehr auf die radiale Krafteinleitung der durch die Biegeaktoren bereitgestellten Kräfte in den Antriebsring bezüglich des Mittelpunktes der Ringbohrung geachtet werden, da das durch die nichtradiale, exzentrische Krafteinleitung hervorgerufene Drehmoment auf den Antriebsring durch die Tangentialkinematik und das Gehäuse im Wesentlichen torsionsfrei aufgenommen wird. Dies eröffnet die Möglichkeit einer platzsparenden Anordnung der Antriebselemente, insbesondere entlang der Seiten oder Hälften des Antriebsringes, also beispielsweise parallel zu zwei über Eck angeordneten Seiten eines (nach außen) rechtwinkligen Antriebsringes. Dadurch ist ein sehr kompakter, bauraumsparender Aufbau des Schrittantriebes realisierbar. Der erfindungsgemäße Schrittantrieb zeichnet sich weiterhin durch eine sehr geringe Anzahl von einfachen Bauteilen aus, so dass der für die Massenproduktion besonders geeignet ist. Ferner wird eine aufgrund unterschiedlicher Wärmedehnung von Kunststoff und Aktor auftretende thermische Verstimmung des Antriebs konstruktiv sicher abgefangen. Durch Formschluß, z. B. mittels einer zwischen Antriebsring und Welle ausgebildeten Verzahnung, wird eine sehr hohe Stellgenauigkeit des erfindungsgemäßen Antriebs im rein gesteuerten Betrieb erreicht, ohne Sensoren und einen Regelkreis in Anspruch nehmen zu müssen.

Erfindungsgemäß wird - zugunsten der Optimierung der Kompaktheit - keine unbedingt vollkommene symmetrische Krafteinleitung auf den Antriebsring angestrebt. Die sich hinsichtlich der Funktion daraus gegebenenfalls ergebenden Konsequenzen, z. B. leichte Gleichlauf- und Drehmomentschwankungen, können durch weitere Maßnahmen soweit reduziert werden, dass die Kundenspezifikationen weiterhin eingehalten werden. Insbesondere können kleine Drehzahlschwankungen (Abweichungen vom Soll) durch eine den reinen Sinusverlauf modulierende Ansteuerung der Antriebselemente ausgeglichen werden.

Bei einer besonders vorteilhaften Ausführungsform der Erfindung sind die Gelenke der Zug-Druckstäbe der Ringaufhängung jeweils als ein Festkörpergelenk ausgebildet. Die Festkörpergelenke können jeweils durch eine Verjüngung des Querschnittes der Zug-Druckstäbe in einem kurzen Abschnitt gebildet sein, was insbesondere fertigungstechnisch von Vorteil ist.

Mit Blick auf die geometrische Implementierung der Tangentialkinematik ist es günstig, die parallel zu der einen Wirkrichtung angeordneten Zug-Druckstäbe entlang gegenüberliegender Seiten oder Hälften des Antriebsringes anzuordnen und jeweils an eine Verstärkung des Antriebsringes anzubinden, die an einer vom Diagonalstab abgewandten Seite oder Hälfte des Antriebsringes angeordnet ist. Dabei ist es weiterhin günstig, die Länge des zwischen Antriebsring und Diagonalstab angeordneten, zu der anderen Wirkrichtung parallelen Zug-Druckstabes kleiner als den Abstand zwischen den beiden parallel zu der einen Wirkrichtung angeordneten Zug-Druckstäben zu wählen.

Eine günstige geometrische Anordnung hinsichtlich des Diagonalstabs lässt sich dadurch erreichen, dass der Diagonalstab aus einem annähernd parallel zu der anderen Wirkrichtung angeordneten Mittelstück und aus Endabschnitten besteht, die zum Mittelstück hin abgewinkelt sind, wobei die Endabschnitte mit gleichem Drehsinn abgewinkelt sind, so dass die Enden des Diagonalstabes einander in etwa diametral gegenüberliegen.

Geometrisch vorteilhaft, das heißt im Wesentlichen in fertigungstechnischer Hinsicht, ist es weiterhin, das Fixierelement, das den parallel zu der anderen Wirkrichtung angeordneten, entlang der vom Antriebsring abgewandten Seite des Diagonalstabes verlaufenden Zug-Druckstab anbindet, an einem annähernd rechteckigen mechanisch steifen Rahmenteil zu befestigen. In einer Weiterbildung dieser Ausführungsform ist das Rahmenteil als ein Gehäuseteil des Schrittantriebs ausgebildet ist. Hinsichtlich des anderen Fixierelementes, das den parallel zu der anderen Wirkrichtung angeordneten, entlang der zum Antriebsring gewandten Seite des Diagonalstabes verlaufenden Zug-Druckstab anbindet, ist eine Integration in einem Bodenelement und/oder Deckel eines Gehäuses des Schrittantriebs vorteilhaft, wobei das zur Anbindung an das Fixierelement vorgesehene Ende des Zug-Druckstabes mit einem am Fixierelement angebundenen Endstück versehen ist. Das Endstück stellt demnach auf einfache Weise eine punktuelle, die wesentlich planare Struktur der Ringaufhängung nicht durchbrechende, Verbindung zwischen der Ebene des Antriebsringes und dem Deckel oder Bodenelement eines Gehäuses her.

Die zwei elektromechanischen Antriebselemente können besonders vorteilhaft als Biegewandler, vorzugsweise piezoelektrische Biegewandler, ausgestaltet sein.

Derartige Festkörper-Biegeaktoren auf Basis piezoelektrischer Keramikwerkstoffe werden in verschiedenartigen Bauformen seit vielen Jahren vielseitig in der Industrie eingesetzt. Sie zeichnen sich durch eine kleine Bauform, einen niedrigen Energiebedarf und eine hohe Zuverlässigkeit aus. So zeigt beispielsweise ein piezoelektrischer Biegeaktor eine Lebensdauer von mindestens 10⁹ Zyklen im industriellen Umfeld. Die in einem Kleinstellantrieb für beispielsweise Zeigerinstrumente zum Einsatz kommenden Biegewandler werden typischerweise so dimensioniert, dass sie an ihrem bewegten Ende eine freie Auslenkung im Bereich von ca. 0,2 mm bis 2 mm aufweisen. Zudem wird im Fall der Auslenkungsblockierung des frei bewegbaren Endes des Biegewandlers eine Blockierkraft im Bereich von 0,5 N bis 2 N erreicht. Die näherungsweise geradlinige Auslenkung der Biegewandler erfolgt jeweils transversal bezogen auf ihre größte Längserstreckung. Die Richtung der Auslenkung, die der Wirkrichtung des Biegewandlers entspricht, ist somit annähernd orthogonal zur Längsachse des Biegewandlers.

Eine besonders kompakte Variante des erfindungsgemäßen Schrittantriebs ergibt sich durch eine Anordnung, bei der an die Verstärkungen am Antriebsring jeweils ein parallel zu der einen beziehungsweise anderen Wirkrichtung angeordneter, entlang einer Seite oder Hälfte des Antriebsringes verlaufender Zug-Druckstab angebunden ist, der zu seinen beiden Enden hin jeweils ein Festkörpergelenk aufweist, und an dessen von der Verstärkung abgewandtem Ende jeweils das bewegte Ende eines senkrecht zum jeweiligen Zug-Druckstab angeordneten, entlang einer Seite oder - bei einem nicht rechtwinklig ausgebildeten Antriebsring - entlang einer Hälfte des Antriebsringes verlaufenden Biegewandlers angekoppelt ist. Durch diese scherflexible Anlenkung der beiden elektromechanischen, vorzugsweise piezoelektrischen, Antriebselemente an den Antriebsring ergibt sich der Vorteil, dass ihre Bewegungsrichtungen entkoppelt voneinander sind, so dass sich die Antriebselemente in ihrer Bewegung nicht oder vernachlässigbar gering behindern. Bei der Krafteinleitung treten also keine Verlustenergien auf. Außerdem ist die Anordnung beziehungsweise Anlenkung der Biegewandler gemäß dieser Ausführungsform sehr platzsparend.

Gemäß einer Weiterbildung der Ausführungsformen mit Biegewandlern ist es vorteilhaft, Gehäuseteile, den Antriebsring, die Zug-Druckstäbe und den Diagonalstab als ein einstückig in Kunststoffspritzgusstechnik gefertigtes Antriebsmodul auszubilden, wobei die Biegewandler mit in das Antriebsmodul eingespritzt sind. Die Realisierung des Antriebsmoduls in Kunststoffspritzgusstechnik ist einfach und kostengünstig, wobei durch die Einbeziehung der Biegeaktoren in den Einspritz- Arbeitsgang die Anzahl der Fertigungsschritte noch weiter reduziert wird.

Zur steifen Lagerung des Antriebsmoduls bzw. zur drehbaren Lagerung der zugehörigen Welle ist es vorteilhaft, ein annähernd quaderförmiges Gehäuse mit einem Bodenelement und einem Deckel vorzusehen, wobei im Bodenelement ein zentraler Lagerblock mit einer Anlagefläche und mit einer ersten Lagerbohrung und im Deckel eine zweite Lagerbohrung für die Welle vorgesehen ist, und wobei die Fixierelemente derart im Gehäuse angeordnet und dort befestigt oder integriert sind, dass die mindestens eine zylindrische Abrollfläche der Welle in einer zugehörigen Abrollfläche einer Ringbohrung des Antriebsringes abrollen kann.

Die bevorzugten Ausführungsformen der vorliegenden Erfindung werden unter Bezugnahme auf die begleitende Zeichnung näher erläutert. Es zeigen:
Fig. 1A und 1B eine Ausführungsform eines in einem Gehäuserahmen fixierten Antriebsmoduls für den erfindungsgemäßen Schrittantrieb jeweils in Draufsicht bzw. in perspektivischer Ansicht,
Fig. 2A und 2B, jeweils in gleicher Ansicht wie Fig. 1, das dortige Antriebsmodul, jedoch mit eingesetzten Biegeaktoren,
Fig. 3A eine Draufsicht auf ein Antriebsmodul mit einem in x-Richtung und, Fig. 3B, einem in y-Richtung ausgelenkten Antriebsring,
Fig. 4A und 4B, jeweils in gleicher Ansicht wie Fig. 1, ein Gehäuse-Bodenelement zur Lagerung der Welle und des Antriebsmoduls,
Fig. 5A und 5B, jeweils in gleicher Ansicht wie Fig. 1, einen zum Gehäuse gemäß Figur 1 bzw. 4 passenden Deckel,
Fig. 6A und 6B, jeweils in gleicher Ansicht wie Fig. 1, eine Ansicht einer Bügelfeder,
Fig. 7A und 7B, jeweils in gleicher Ansicht wie Fig. 1, eine Welle für den erfindungsgemäßen Schrittantrieb,
Fig. 8 einen axialen Querschnitt entlang der z-Achse durch den gehäusten Antrieb im zusammengebauten Zustand.

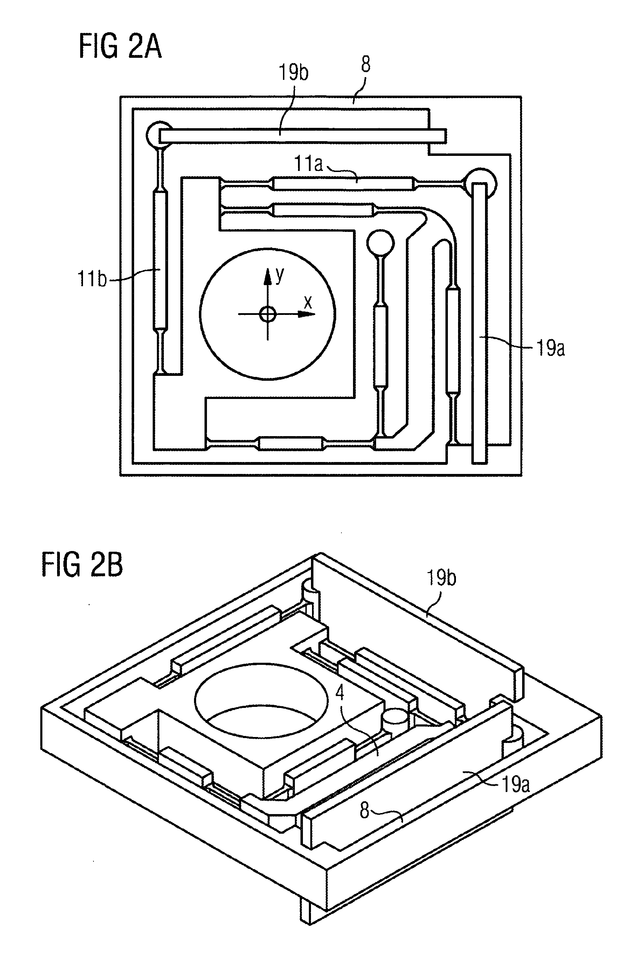

Erfindungsgemäß wird ein piezoelektrischer Schrittmotor vorgestellt, der es erlaubt, durch eine Überlagerung geeigneter periodischer Linearbewegungen der Biegewandler eine kontinuierliche und gleichförmige Rotation zu erzeugen. Zu diesem Zweck werden die Biegewandler 19a, 19b, vgl. Figur 2, mittels einer eine Verschiebbarkeit in der x-y-Ebene gewährleistenden Ringaufhängung, in der die erfindungsgemäße Tangentialkinematik implementiert ist, derart an einen flachen Antriebsring 1 angekoppelt, dass dieser entlang der zueinander senkrechten Wirkrichtungen x und y der Biegewandler 19a, 19b (vgl. Figur 2) translatierbar ist. Die im Wesentlichen aus dem (im Rahmenteil 8 integrierbaren) Fixierelement 12 zusammen mit dem Antriebsring 1, dem Diagonalstab 4, den Zug-Druckstäben 3a, 3b, 6a, 6b, 11a, 11b und, gegebenenfalls, den integrierten Biegewandlern 19a, 19b, gebildete Einheit wird im Folgenden als 'Antriebsmodul' bezeichnet. Das Antriebsmodul ist mit Hilfe einer Spritzgusstechnik aus Polyethylen, Spritzguss-Kunststoff, POM oder aus anderen geeigneten Werkstoffen herstellbar.

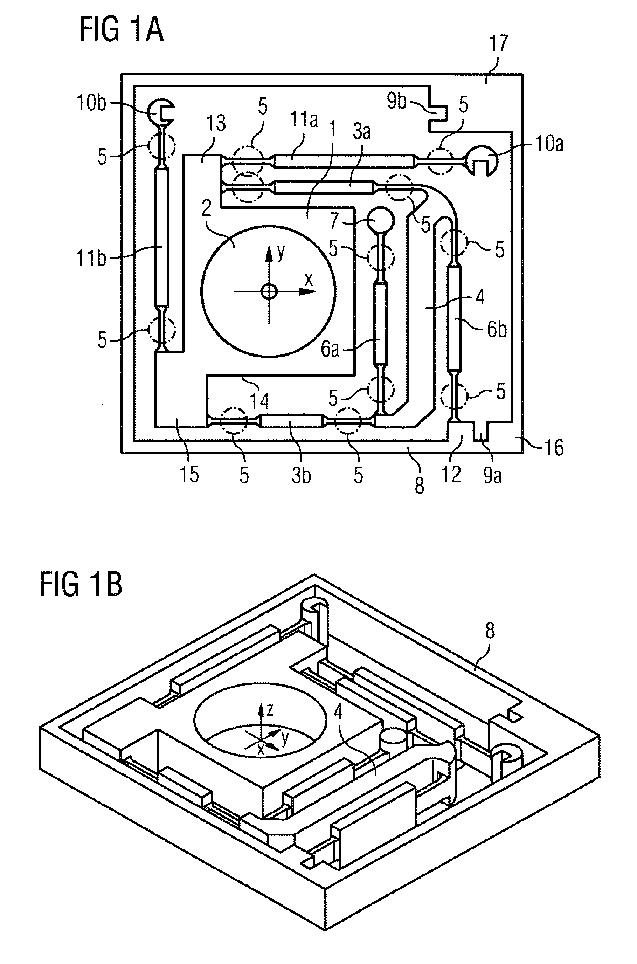

Figur 1 zeigt die im Wesentlichen planare und deshalb einfach herstellbare Struktur des Antriebsmoduls in der Draufsicht und in der Perspektive. Es besteht zunächst aus einem Antriebsring 1, der eine zylindrische Ringbohrung 2 enthält, deren Achse z. B. mit der z-Achse eines kartesischen Koordinatensystems zusammenfällt, dessen x-y-Ebene sich parallel zur Blattebene erstreckt. Der Antriebsring 1 ist beispielshalber rechtwinklig ausgebildet und mit seinen (Außen)kanten beziehungsweise Seiten 14 parallel zu den beiden zueinander senkrechten Wirkrichtungen der Antriebselemente 19a, 19b ausgerichtet. Der Antriebsring 1 ist mittels zweier in etwa zueinander parallel verlaufender und in ihrer Längserstreckung in etwa parallel zur x-Richtung ausgerichteter Zug-Druckstäbe 3a, 3b mit einem mechanisch hinreichend steifen Diagonalstab 4 verbunden. Die Anbindung der Zug-Druckstäbe 3a, 3b an den Antriebsring 1 und an den Diagonalstab 4 erfolgt mittels so genannter Festkörpergelenke 5. Festkörpergelenke ermöglichen, wie gewöhnliche Gelenke (allerdings nur innerhalb eines begrenzten Winkelbereiches, dafür aber spielfrei) eine nahezu ungehinderte Rotation der angeschlossenen Elemente relativ zueinander. Ihre Funktion basiert auf dem Biegeprinzip. Erreicht wird die lokale Biegung durch eine gezielte Verringerung des Stabquerschnittes in einem kurzen Abschnitt. Der reduzierte Stabquerschnitt führt zu einer stark reduzierten Biegesteifigkeit. Da die Querschnittsverjüngung sehr lokalisiert ist, wird die axiale Federrate (Steifigkeit) des Stabes aber kaum verringert. Die Querschnittsverjüngung kann in der (Blatt-)Ebene und/oder auch als Taillierung senkrecht zur Blattebene erfolgen. Die geometrische Ausgestaltung der Festkörpergelenke hinsichtlich axialer Steifigkeit und Drehsteifigkeit, sowie Grad der Lokalisierung und deren Einfluss auf die Funktion und Herstellbarkeit des Stellantriebs kann zum Beispiel mit Hilfe von Finite Elemente Modellen noch hinsichtlich des jeweiligen Einsatzfalles optimiert werden.

Die paarweise in etwa parallel zueinander und parallel zur x-Achse verlaufende Anordnung der Stabelemente 3a, 3b in Kombination mit ihrer Anbindung an den mechanisch hinreichend steifen Antriebsring 1 und an den mechanisch hinreichend steifen Diagonalstab 4 durch Festkörpergelenke 5 hat zur Folge, dass der Antriebsring 1 relativ leicht (d. h. nahezu kräftefrei) relativ zum Diagonalstab 4 in Form einer Scherung in y-Richtung verschoben werden kann. Einer Torsion des Antriebsringes 1 und einer Verschiebung des Ringes in x-Richtung relativ zum Diagonalstab 4 setzt diese Struktur sehr hohen Widerstand entgegen.

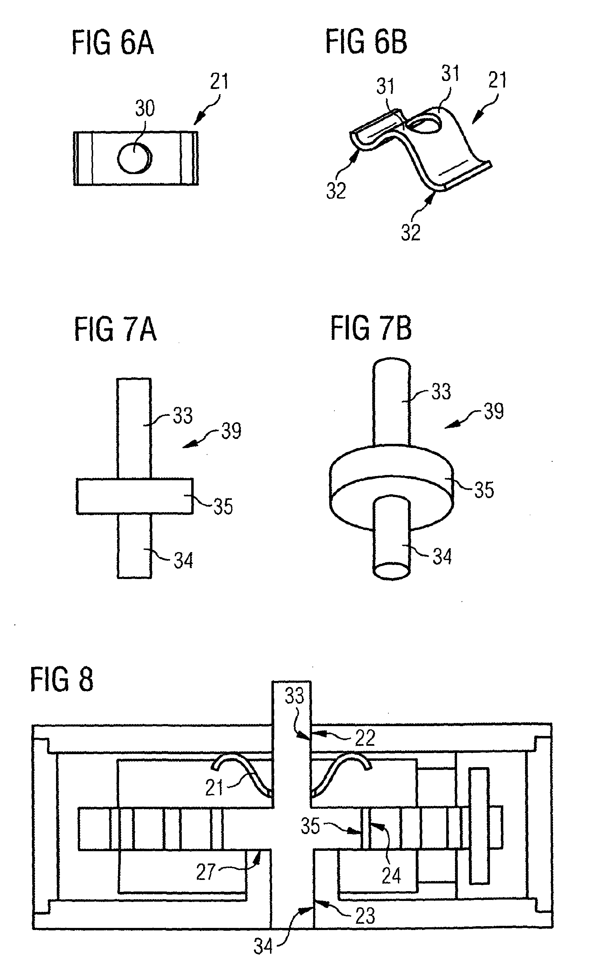

Die beiden diametral gegenüberliegenden Enden des Diagonalstabes 4 sind mittels zweier in etwa parallel zueinander verlaufender und in ihrer Längserstreckung in etwa parallel zur y-Richtung ausgerichteter Zug-Druckstäbe 6a, 6b mit dem Gehäuse des Schrittantriebs verbunden. Im Falle des Stabes 6a erfolgt die Gehäuseanbindung beispielsweise über ein sich teilweise senkrecht zum Stab 6a erstreckendes Endstück 7 des Stabes 6a, das steif mit einem hier nicht dargestellten Boden-, und/oder Deckelelement eines Gehäuses mechanisch hinreichend steif kraft- oder formschlüssig verbunden ist, z. B. durch Verpressen, Verstiften, Schweißen, Kleben etc. Der Stab 6b ist an seinem von der Anbindung an den Diagonalstab 4 abgewandten Ende mit einem Rahmenteil 8 verbunden. Das Rahmenteil 8 kann integraler Bestandteil eines (weiter unten in Figur 8 dargestellten) Gehäuses sein oder mit diesem hinreichend steif verbunden sein. Die Anbindung der mechanisch steifen Zug-Druckstäbe 6a, 6b an das Rahmenteil 8, das Endstück 7 beziehungsweise an den Diagonalstab 4 erfolgt ebenfalls über Festkörpergelenke 5.

Die zueinander paarweise, und zur y-Achse in etwa parallele Anordnung der Stabelemente 6a, 6b, wobei sich die Anbindungsstellen der Stäbe 6a, 6b an entgegengesetzten Enden des Diagonalstabes 4 befinden, und wobei die Anbindung eines Stabes ans Gehäuse (oder einer damit steif verbundenen Komponente) in etwa auf gleicher Höhe (y-Koordinate) mit der Anbindung des anderen Stabes an den Diagonalstab 4 zu liegen kommt, und wobei die Stabanbindungen der Stabelemente 6a, 6b an allen vier Enden mittels Festkörpergelenken 5 erfolgen, bedingt, dass der Diagonalstab 4 ohne nennenswerten Widerstand (d. h. nahezu kräftefrei) relativ zum Gehäuse in x-Richtung verschoben werden kann. Einer Torsion des Diagonalstabes 4 und einer Verschiebung des Diagonalstabes in y-Richtung relativ zum Gehäuse setzt diese Struktur sehr hohen Widerstand entgegen.

Als Konsequenz aus der Struktur der Anbindung des Antriebsringes 1 an den Diagonalstab 4 in Kombination mit der Struktur der Anbindung des Diagonalstabes an das Gehäuse oder damit mechanisch steif verbundener Teile (z.B. Endstück 7, Rahmenteil 8) ist der Antriebsring 1 relativ zum Gehäuse in der x-y-Ebene nahezu kräftefrei in jede Richtung verschiebbar, aber torsionssteif gelagert. Jedes am Antriebsring 1 angreifende Drehmoment wird durch die erfindungsgemäße Tangentialkinematik an das Gehäuse übertragen, ohne dass dabei der Ring nennenswert rotiert wird. Die verursachten Auslenkungen in der Ringaufhängung bewegen sich im Bereich von nur ca. hundert Mikrometer.

Das Rahmenteil 8 bildet in diesem Ausführungsbeispiel gleichzeitig einen Teil des Antriebsgehäuses und kann gegebenenfalls Verstärkungen 16, 17 aufweisen (z.B. in den Ecken und Kanten). Das Rahmenteil 8 kann zur Befestigung des Stellantriebs, insbesondere des Fixierelementes 12 dienen und wird daher als raumfest angenommen. Wie in Figur 1 weiterhin zu erkennen ist, enthalten die Verstärkungen 16 und 17 des Rahmenteiles 8 Aufnahmen 9a bzw. 9b zur torsionssteifen Befestigung von streifenförmigen elektromechanischen (beispielsweise piezoelektrischen) Biegeaktoren. Im Rahmenteil 8 können hier nicht gezeigte Maßnahmen vorgesehenen sein, um die Biegeaktoren an ihrem (im Rahmenteil 8) ruhenden Ende elektrisch zu kontaktieren (z.B. Druckkontaktstifte, Klemmkontakte, Bügelfederkontakte etc.). Alternativ können die Biegeaktoren auch im bewegten Bereich bzw. an ihrem entgegengesetzten bewegten Ende elektrisch angeschlossen sein.

Zur Aufnahme der bewegten Enden der mit ihren ruhenden Enden in die Aufnahmen 9a,9b des Rahmenteils 8 einzusetzenden Biegeaktoren sind geeignete Aufnahmekörper 10a, 10b vorgesehen, die jeweils über eine Sequenz bestehend aus einem Festkörpergelenk 5, einem starren Zug-Druckstab 11a, 11b und einem weiteren Festkörpergelenk 5 am Antriebsring 1 befestigt werden.

Figur 2 zeigt das Antriebsmodul mit eingesetzten Festkörper-biegeaktoren 19a, 19b, die im Folgenden nur kurz Aktor genannt werden. In der dargestellten beispielhaften Konfiguration sind die Aktoren 19a, 19b an ihrem ruhenden Ende mechanisch steif im Rahmenteil 8 befestigt und in etwa orthogonal zueinander angeordnet. Die Steifigkeit der Anbindung der Aktoren 19a, 19b an das Rahmenteil 8 kann durch Verstärkungen 16, 17 des Rahmenteils 8 erhöht werden. Wird ein Aktor 19a, 19b elektrisch angesteuert, so vollzieht er eine Biegebewegung, wobei sein bewegtes Ende im Wesentlichen eine Bewegung senkrecht zu seiner Längserstreckung ausführt. Die Bewegungsrichtung der Aktoren 19a, 19b wird auch mit Wirkrichtung bezeichnet.

Daher lenkt sich der Biegeaktor 19a bei elektrischer Ansteuerung in x-Richtung aus bzw. erzeugt bei Widerstand eine Kraft in x-Richtung. Diese Bewegung bzw. Kraft wird mechanisch steif durch den Zug-Druckstab 11a auf den starren Antriebsring 1 übertragen. Der Biegeaktor 19b lenkt sich bei elektrischer Ansteuerung in y-Richtung aus bzw. erzeugt bei Widerstand eine Kraft in y-Richtung. Diese Bewegung bzw. Kraft wird mechanisch steif durch den Zug-Druckstab 11b auf den starren Antriebsring 1 übertragen. Die Anbindung der Zug-Druckstäbe 11a, 11b an die Aufnahmekörper 10a, 10b und darüber an den Antriebsring 1 mittels Festkörpergelenken 5 bewirkt, dass die Biegeaktoren 19a, 19b völlig unabhängig voneinander wirken und sich nicht gegenseitig beeinflussen können. Die Aktoren müssen also insbesondere nicht gegen die vergleichsweise hohe mechanische Steifigkeit des jeweils anderen Biegewandlers arbeiten. Die Bewegungen der Biegewandler 19a, 19b sind also entkoppelt.

Wird ein Biegeaktor elektrisch angesteuert, so biegt er sich näherungsweise in Form eines Kreisbogens, wodurch sich die Tangentensteigung der Biegelinie am bewegten Ende des Biegeaktors ändert. Diese Art der "Drehbewegung", wird durch die Festkörpergelenke 5 sicher abgefangen. Ebenso wird eine Änderung der Biegerlänge relativ zum Antriebsmodul (hervorgerufen z.B. durch unterschiedliche thermische Dehnung der Materialien der Tangentialkinematik, des Gehäuses und der Biegeaktoren 19a, 19b) durch die Zug-Druckstabkopplung 11a, 11b mit Festkörpergelenken 5 sicher abgefangen, indem die Stäbe 11a, 11b minimal rotiert werden, ohne dass hierdurch deren Kraft- bzw. Wegübertragungsfunktion merklich beeinträchtigt wird.

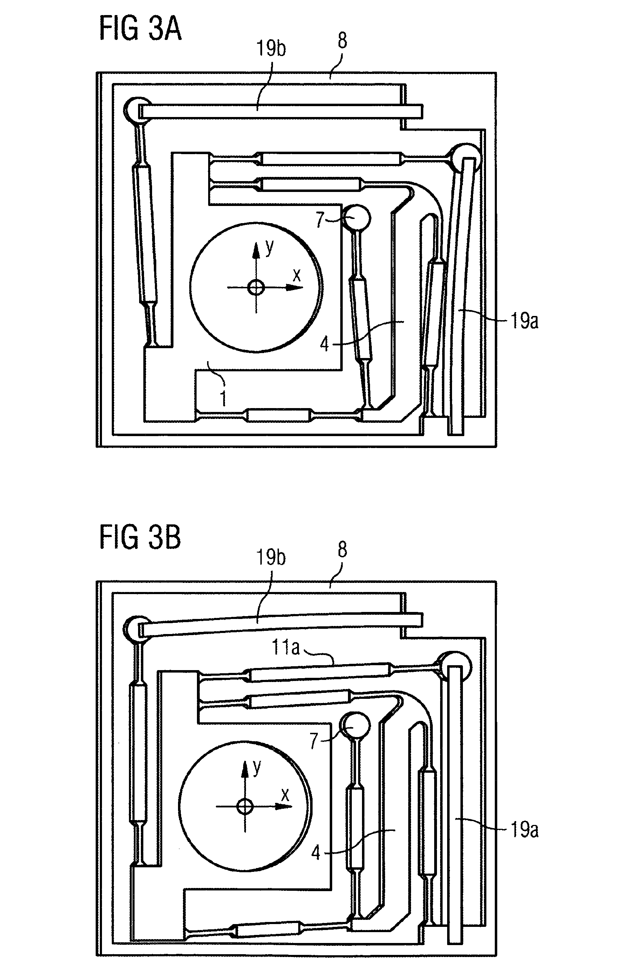

Figur 3A zeigt die Reaktion (Deformation) der Tangentialkinematik bei Ansteuerung von Biegeaktor 19a zu einer Auslenkung parallel zur positiven x-Richtung. Der Diagonalstab 4 wird durch die Zug-Druckstäbe 3a, 3b in positive x-Richtung verschoben. Als Ergebnis gilt es festzuhalten, dass der Antriebsring 1 der x-Bewegung des bewegten Endes von Aktor 19a unmittelbar folgt ohne zu tordieren, wobei die Struktur der Aufhängung des Diagonalstabes 4 die nötige Führung und Flexibilität gewährleistet. Möglich wäre auch eine alternative Ausführungsform, bei der sich die Enden des Diagonalstabes 4 von "links oben" nach "rechts unten", also umgekehrt wie in den in den Figuren 1 bis 8 gezeigten Ausführungsbeispielen dargestellt, diametral gegenüberstehen.

Figur 3B zeigt die Reaktion (Deformation) der Tangentialkinematik bei Ansteuerung von Biegeaktor 19b zu einer Auslenkung parallel zur negativen y-Richtung. Als Ergebnis gilt es festzuhalten, dass der Antriebsring 1 der y-Bewegung des bewegten Endes von Aktor 19b unmittelbar folgt ohne zu tordieren, wobei die Struktur der Aufhängung des Ringes 1 am Diagonalstab 4 die hierfür nötige Führung und Flexibilität gewährleistet.

Insgesamt bewegen die Biegeaktoren 19a und 19b den Antriebsring 1 völlig unabhängig voneinander in x- bzw. y-Richtung relativ zum Gehäuse. Eine Ringtorsion wird durch die Tangentialkinematik unterbunden. Es resultiert eine sehr kompakte und stringent planare Struktur des Antriebsmoduls mit einer sehr geringen Anzahl von einfachen Bauteilen. Das Antriebsmodul ist deshalb auch produktionsfreundlich. Das Antriebsmodul kann beispielsweise einfach und kostengünstig in Kunststoffspritzgusstechnik realisiert werden und besonders vorteilhaft können die Biegeaktoren 19a, 19b in einem Arbeitsgang mit in den Antriebsmodul eingespritzt werden, wodurch die Anzahl der Fertigungsschritte weiter reduziert wird. Im Übrigen fängt die Struktur der Anbindung der Biegeaktoren 19a, 19b an den Antriebsring 1 relative Längenänderungen der Elemente zueinander (z.B. durch unterschiedliche thermische Ausdehnung der eingesetzten Werkstoffe) ab.

Zur Realisierung des mit dem Antriebsmodul verbundenen tangentialkinematischen Prinzips im Schrittmotor sind des Weiteren eine Welle und eine möglichst spielfreie, aber drehbare Lagerung derselben, sowie eine steife Lagerung des Antriebsmoduls erforderlich:

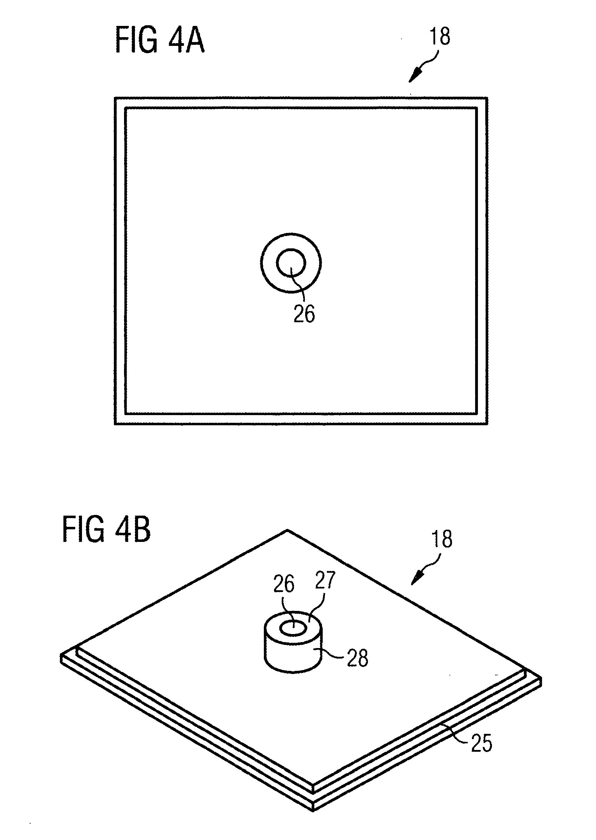

Figur 4 zeigt ein hierfür im Zusammenhang mit dem Gehäuserahmen 8 geeignetes Bodenelement 18. Es enthält eine zu einer Umlaufkante des Rahmenteils des Antriebsmoduls gepaarte Umlaufnut 25, die beim Einsetzen des Bodenelementes 18 in das Antriebsmodul gewährleistet, dass die Bohrungsachse einer Lagerbohrung 26 kongruent zur Achse der Ringbohrung 2 des Ringes 1 zu liegen kommt. Der Durchmesser der Lagerbohrung 26 ist zu einer zylindrischen Gleitfläche zur Welle 39, vergleiche Figur 8, gepaart, die zusammen eine erste spielfreie, aber reibungsarme Drehlagerung für die Welle 39 bilden. Die Stirnfläche 27 des zentralen Lagerblocks 28 dient als Anlagefläche für die Welle 39, damit eine Abrollfläche der Welle 39 auf gleicher Höhe mit der Ringbohrung 2 zu liegen kommt.

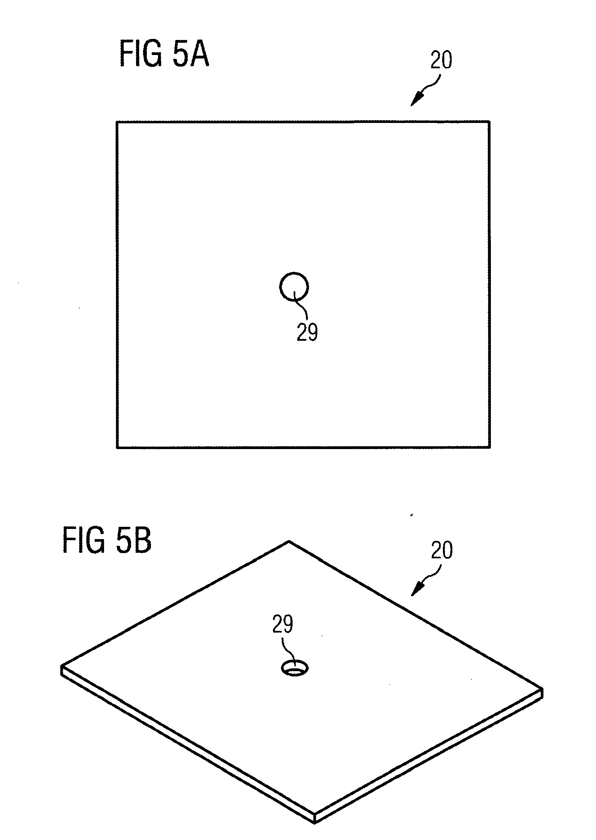

Figur 5 zeigt den zum Gehäuserahmen 8 und Bodenelement 18 passenden Deckel 20, der an seiner Unterseite ebenfalls eine Umlaufnut aufweist, die zu einer Umlaufkante des Rahmenteils 8 des Antriebsmoduls gepaart ist, so dass beim Einsetzen des Deckels 20 in das Antriebsmodul die Achse einer Lagerbohrung 29 kongruent zur Achse der Ringbohrung 2 zu liegen kommt. Der Durchmesser der Lagerbohrung 29 ist zu einer zweiten zylindrischen Gleitfläche zur Welle 39 gepaart, die zusammen eine zweite spielfreie, aber reibungsarme Drehlagerung für die Welle 39 bilden, vergleiche Figuren 7 und 8.
Figur 6 zeigt eine geeignete Bügelfeder 21. Sie enthält eine Bohrung 30 zum Durchtritt der Wellenachse, wodurch sichergestellt wird, dass diese im Betrieb nicht 'Auswandern' kann. Die Bügelfeder 21 stützt sich über Flächen 31 nahe der Bohrungsachse in Form einer Berührungslinie auf der Welle 39 ab, um ein durch Reibung erzeugtes Bremsdrehmoment auf die Welle 39 möglichst klein zu halten. Die weit außen liegenden unteren Flächen 32 dienen zur Abstützung der Bügelfeder 21 auf einer Deckelfläche. Die Kraft der Bügelfeder 21 ist hinreichend bemessen, um die Welle 39 in allen Betriebszuständen sicher auf Anlage mit der Stirnfläche 27 des Lagerblocks 28 des Bodenelementes 18 zu halten, aber auch möglichst klein gehalten, um nennenswerte Reibungskräfte, die die Drehung der Welle 39 behindern würden zu vermeiden. Auf diese Weise wird sichergestellt, dass die Abrollflächen von Antriebsring 1 und Welle 39 unter allen Betriebsbedingungen hinreichend genau in z-Richtung zueinander lokalisiert bleiben.
Figur 7 zeigt eine geeignete Welle 39. Sie besitzt zwei zylindrische Gleitlagerflächen 33, 34, die mit den zylindrischen Innenflächen der Lagerbohrungen 29, 26 gepaart sind, und mindestens eine zylindrische Abrollfläche 35, die mit mindestens einer Abrollfläche 105 der Ringbohrung 2 des Antriebsringes 1 gepaart ist. Die axiale Verlängerung der Fläche 33 dient zum Anschluss des jeweiligen, vom Schrittmotor anzutreibenden Elementes an die Welle 39.
Figur 8 zeigt einen axialen Querschnitt entlang der z-Achse durch den Antrieb im zusammengebauten Zustand. Sie zeigt insbesondere die Lage seiner Bestandteile zueinander. Die Welle 39 ist an zwei Stellen in Form enger Spielpassungen anhand der Gleitflächenpaare 33, 22 und 34, 23 um die z-Achse reibungsarm drehbar, aber mechanisch steif gegenüber Translation gelagert. Eine geeignete Bügelfeder 21 hält im Zusammenwirken mit der Anlagefläche 27 die Welle 39 bezüglich der z-Richtung reibungsarm fixiert. Das Antriebsmodul hält im Ruhezustand die Abrollfläche 24 der Ringbohrung 2 sowohl konzentrisch als auch in z-Richtung in geeigneter Lage relativ zur Abrollfläche 35 der Welle 39.

Mit Hilfe geeigneter elektrischer Ansteuerfunktionen vollziehen die Biegeaktoren 19a, 19b jeweils an ihrem bewegten Ende Auslenkungen mit sinus- bzw. kosinusförmigen zeitlichem Verlauf um die Ruhelage, wodurch die Abrollfläche 24 der Ringbohrung 2 auf Anlage mit der Abrollfläche 35 der Welle 39 gehalten und in Form einer kreisförmigen Verschiebebewegung um die Abrollfläche 35 der Welle 39 bewegt wird und dadurch die Welle 39 in Rotation versetzt. Mittels der relativen Phasenlage der x- bzw. y-Auslenkungen des Antriebsringes 1 wird die Drehrichtung festgelegt und mit Hilfe der Steuerfrequenz die Drehgeschwindigkeit.

Im einfachsten Fall erfolgt die Kraftübertragung vom Antriebsring 1 auf die Welle 39 durch Reibung. Dabei kann es in Abhängigkeit vom auf die Welle 39 wirkenden Lastdrehmoment eines derartig aufgebauten Stellantriebs zu Schlupf kommen, wodurch die Genauigkeit des Stellantriebs reduziert wird. Der Schlupf wird vorzugsweise durch die Einführung eines Formschlusses zwischen den Abrollflächen von Antriebsring 1 und Welle 39 verringert, insbesondere indem auf die Innenfläche 24 des Antriebsrings 1 und auf die Außenfläche 35 der Welle 39 eine Verzahnung aufgebracht wird. Dabei weisen Antriebsring 1 und Welle 39 vorzugsweise eine Zahndifferenz von mindestens eins auf. Das bedeutet, dass die Verzahnung der Innenfläche 24 des Antriebsrings 1 mindestens einen Zahn mehr als die Außenfläche 35 der Welle 39 umfasst. Werden Antriebsring 1 und Welle 39 innerhalb des Stellantriebs derart betrieben, dass die Verzahnung nicht außer Eingriff gerät, arbeitet der Stellantrieb idealerweise schlupffrei.

Als besonders bevorzugt wird eine zykloidische Verzahnung von Antriebsring 1 und Welle 39 angesehen. Bei der zykloidischen Verzahnung ist nahezu die Hälfte aller Zähne im Eingriff, wodurch ein hohes Drehmoment zwischen Antriebsring 1 und Welle 39 übertragbar ist. Über die Anzahl der auf der Innenfläche 24 des Antriebsrings 1 und der Außenfläche 35 der Welle 39 befindlichen Zähne ist zunächst eine Untersetzung des Stellantriebs festgelegt, die typischerweise in einem Bereich von 20:1 bis 200:1 liegt. Um den Stellantrieb um nur einen Zahn weiter zu stellen, das heißt die Welle 39 durch den Antriebsring 1 um einen Zahn weiter zu drehen, muss vorzugsweise eine vollständige Periode des ansteuernden Sinussignals des Stellantriebs durchlaufen werden. Da zum Weiterstellen um einen Zahn ein Zyklus des Ansteuersignals durchlaufen werden muss, zeichnet sich der Stellantrieb durch eine hohe Genauigkeit und durch eine hohe Wiederholgenauigkeit aus. Zudem wird über die Anzahl der Zähne und die Nutzung von einem Zyklus des Ansteuersignals pro Zahn eine hohe Winkelauflösung des Stellantriebs realisiert. Ergänzend dazu kann beliebig innerhalb einer Periode des Ansteuersignals interpoliert werden, um einen Mikroschrittbetrieb des Stellantriebs zu gewährleisten. Somit liefert der Stellantrieb gemäß bevorzugter Konstruktionen eine hohe Effizienz, eine hohe Untersetzung, ein hohes übertragbares Drehmoment basierend auf der Verzahnung von Antriebsring 1 und Welle 39, Schlupffreiheit bei der Übertragung des Drehmoments, eine beliebige Interpolation des Drehwinkels innerhalb eines Zahns der Welle 39 (Mikroschrittbetrieb), geringe Antriebsdrehmomentschwankungen (Ripple) und eine niedrige Zahnflankenbelastung für Antriebsring 1 und Welle 39, so dass ebenfalls der Verschleiß reduziert wird.

## Patentansprüche

1. Elektromechanischer Motor, insbesondere piezoelektrischer Mikroschrittantrieb, aufweisend:
- zwei elektromechanische Antriebselemente (19a, 19b), die annähernd senkrecht zueinander ausgerichtete Wirkrichtungen aufweisen,
- eine in einem Antriebsring (1) derart drehbar gelagerte Welle (39), dass der Antriebsring (1) durch eine Auslenkung der elektromechanischen Antriebselemente (19a, 19b) in die jeweilige Wirkrichtung zu einer unmittelbar auf die Welle (39) übertragbaren Verschiebebewegung anregbar ist, so dass die Welle (39) im Antriebsring (1) abrollt und **dadurch** rotiert, **dadurch gekennzeichnet, dass**
- der Antriebsring (1) mittels zweier zueinander und zu einer der beiden Wirkrichtungen parallelen Zug-Druckstäbe (3a, 3b), die jeweils zu ihren beiden Enden hin jeweils ein Gelenk (5) aufweisen, an die Enden eines Diagonalstabes (4) angebunden ist, so dass der Antriebsring (1) relativ zum Diagonalstab (4) in Form einer Scherung in die andere der beiden Wirkrichtungen verschiebbar ist, und
- die diametral gegenüberliegenden Enden des sich mindestens abschnittsweise schräg zu den beiden Wirkrichtungen erstreckenden Diagonalstabes (4) jeweils mittels eines zu der anderen Wirkrichtung parallelen Zug-Druckstabs (6a, 6b), der zu seinen beiden Enden hin jeweils ein Gelenk (5) aufweist, an jeweils ein Fixierelement (12) angebunden sind, wobei das Fixierelement (12) des einen Stabes (6a, 6b) und die Anbindungsstelle des anderen Stabes (6a, 6b) an den Diagonalstab (4) - und umgekehrt - einander jeweils in etwa entlang einer Parallele zu der einen Wirkrichtung gegenüberliegen, so dass der Diagonalstab (4) relativ zu den Fixierelementen (12) in die eine Wirkrichtung verschiebbar ist.

2. Elektromechanischer Motor nach Anspruch 1, bei dem die Gelenke (5) der Zug-Druckstäbe (3a, 3b, 6a, 6b) jeweils als ein Festkörpergelenk ausgebildet sind.

3. Elektromechanischer Motor nach Anspruch 2, bei dem die Festkörpergelenke (5) jeweils durch eine Querschnittsverjüngung der Zug-Druckstäbe (3a, 3b, 6a, 6b) in einem kurzen Abschnitt gebildet sind.

4. Elektromechanischer Motor nach einem der Ansprüche 1 bis 3, bei dem die parallel zu der einen Wirkrichtung angeordneten Zug-Druckstäbe (3a, 3b) entlang gegenüberliegender Seiten (14) oder Hälften des Antriebsringes (1) angeordnet und jeweils an eine Verstärkung (13, 15) des Antriebsringes (1) angebunden sind, die an einer vom Diagonalstab (4) abgewandten Seite oder Hälfte des Antriebsringes (1) angeordnet ist.

5. Elektromechanischer Motor nach Anspruch 4, bei dem die Länge des zwischen Antriebsring (1) und Diagonalstab (4) angeordneten, zu der anderen Wirkrichtung parallelen Zug-Druckstabes (6a) kleiner als der Abstand zwischen den beiden parallel zu der einen Wirkrichtung angeordneten Zug-Druckstäben (3a, 3b) ist.

6. Elektromechanischer Motor nach einem der Ansprüche 1 bis 5, bei dem der Diagonalstab (4) aus einem annähernd parallel zu der anderen Wirkrichtung angeordneten Mittelstück und aus Endabschnitten besteht, die zum Mittelstück hin abgewinkelt sind, wobei die Endabschnitte mit gleichem Drehsinn abgewinkelt sind, so dass die Enden des Diagonalstabes (4) einander in etwa diametral gegenüberliegen.

7. Elektromechanischer Motor nach einem der Ansprüche 1 bis 6, bei dem das Fixierelement (12), das den parallel zu der anderen Wirkrichtung angeordneten, entlang der vom Antriebsring (1) abgewandten Seite des Diagonalstabes (4) verlaufenden Zug-Druckstab (6b) anbindet, an einem annähernd rechteckigen mechanisch steifen Rahmenteil (8) befestigt ist.

8. Elektromechanischer Motor nach Anspruch 7, bei dem das Rahmenteil (8) als ein Gehäuseteil des Schrittantriebs ausgebildet ist.

9. Elektromechanischer Motor nach einem der Ansprüche 1 bis 8, bei dem das Fixierelement, das den parallel zu der anderen Wirkrichtung angeordneten, entlang der zum Antriebsring (1) gewandten Seite des Diagonalstabes (4) verlaufenden Zug-Druckstab (6a) anbindet, in einem Bodenelement (18) und/oder Deckel (20) eines Gehäuses des Schrittantriebs integriert ist, wobei das zur Anbindung an das Fixierelement vorgesehene Ende des Zug-Druckstabes (6a) mit einem am Fixierelement angebundenen Endstück (7) versehen ist.

10. Elektromechanischer Motor nach einem der Ansprüche 1 bis 9, dessen zwei elektromechanische Antriebselemente (19a, 19b) Biegewandler, vorzugsweise piezoelektrische Biegewandler, sind.

11. Elektromechanischer Motor nach Anspruch 4 und 10, bei dem an die Verstärkungen (13, 15) am Antriebsring (1) jeweils ein parallel zu der einen beziehungsweise anderen Wirkrichtung angeordneter, entlang einer Seite (14) oder Hälfte des Antriebsringes (1) verlaufender Zug-Druckstab (11a, 11b) angebunden ist, der zu seinen beiden Enden hin jeweils ein Festkörpergelenk (5) aufweist, und an dessen von der Verstärkung (13, 15) abgewandtem Ende jeweils das bewegte Ende eines senkrecht zum jeweiligen Zug-Druckstab (11a, 11b) angeordneten, entlang einer Seite (14) oder Hälfte des Antriebsringes (1) verlaufenden Biegewandlers (19a, 19b) angekoppelt ist.

12. Elektromechanischer Motor nach Anspruch 10 oder 11, bei dem mindestens das Rahmenteil (8), der Antriebsring (1), die Zug-Druckstäbe (3a, 3b, 6a, 6b, 11a, 11b) und der Diagonalstab (4) ein einstückig in Kunststoffspritzgusstechnik gefertigtes Antriebsmodul bilden, wobei die Biegewandler (19a, 19b) mit in das Antriebsmodul eingespritzt sind.

13. Elektromechanischer Motor nach einem der Ansprüche 1 bis 12, bei dem ein annähernd quaderförmiges Gehäuse mit einem Bodenelement (18) und einem Deckel (20) vorgesehen ist, wobei im Bodenelement (18) ein zentraler Lagerblock (28) mit einer Anlagefläche (27) und mit einer ersten Lagerbohrung (26) und im Deckel (20) eine zweite Lagerbohrung (29) für die Welle (39) vorgesehen ist, und wobei die Fixierelemente (12) derart am Gehäuse angeordnet und dort befestigt oder integriert sind, dass die mindestens eine zylindrische Abrollfläche (35) der Welle (39) in einer zugehörigen Abrollfläche (24) einer Ringbohrung (2) des Antriebsringes (1) abrollen kann.

14. Elektromechanischer Motor nach Anspruch 13, bei dem die Welle (39) mit einem scheibenförmigen Mittelstück ausgebildet ist, dessen erste ringförmige Stirnfläche auf dem Lagerblock (28) aufliegt und dessen Mantelfläche die zylindrische Abrollfläche (35) der Welle (39) bildet.

15. Elektromechanischer Motor nach Anspruch 14, bei dem zur Sicherstellung der Fixierung in z-Richtung der Achse der Welle (39) eine mit einer Bohrung (30) zum Durchtritt der Welle (39) versehene Bügelfeder (21) vorgesehen ist, die sich einerseits auf der zweiten ringförmigen Stirnfläche des scheibenförmigen Mittelstücks der Welle (39) und andererseits bei aufgesetztem Deckel auf einer Fläche des Deckels so abstützt, dass die Drehung der Welle (39) nicht nennenswert behindert wird.

16. Elektromechanischer Motor nach einem der Ansprüche 1 bis 15, bei dem zur formschlüssigen Kraftübertragung auf die Innenfläche (24) der Ringbohrung (2) des Antriebsringes (1) und auf die zugehörige Abrollfläche (35) der Welle (39) eine Verzahnung, insbesondere eine zykloide Verzahnung, aufgebracht ist.

## Claims

1. Electromechanical motor, especially a piezoelectric microstepper drive, exhibiting:
- two electromechanical drive elements (19a, 19b) which exhibit effective directions aligned approximately perpendicularly to one another,
- a shaft (39) supported rotatably in a drive ring (1) in such a manner that the drive ring (1) can be activated by a deflection of the electomechanical drive elements (19a, 19b) into the respective effective direction to perform a displacement movement which can be transmitted directly to the shaft (39), in such a manner that the shaft (39) rolls in the drive ring (1) and as a result rotates, **characterized in that**
- the drive ring (1) is linked to the ends of a diagonal bar (4) by means of two tension-compression rods (3a, 3b) which are parallel to one another and to one of the two effective directions and which in each case have toward their two ends a hinge (5) so that the drive ring (1) can be displaced into the other one of the two effective directions in the form of a shearing relative to the diagonal bar (4), and
- the diametrically opposite ends of the diagonal bar (4) extending obliquely to the two effective directions at least section by section are in each case connected to in each case a fixing element (12) by means of a tension-compression rod (6a, 6b) which is parallel to the other effective direction and which in each case has a hinge (5) toward its two ends, the fixing element (12) of the one rod (6a, 6b) and the joint of the other rod (6a, 6b) to the diagonal bar (4) - and conversely - are in each case opposite to one another approximately along a parallel to the one effective direction so that the diagonal bar (4) can be displaced in the one effective direction relative to the fixing elements (12).

2. Electromechanical motor according to Claim 1, in which the hinges (5) of the tension-compression rods (3a, 3b, 6a, 6b) are in each case constructed as a flexure hinge.

3. Electromechanical motor according to Claim 2, in which the flexure hinges (5) are in each case formed by a cross-sectional tapering of the tension-compression rods (3a, 3b, 6a, 6b) in a short section.

4. Electromechanical motor according to one of Claims 1 to 3, in which the tension-compression rods (3a, 3b) arranged in parallel with the one effective direction are arranged along opposite sides (14) or halves of the drive ring (1) and are in each case linked to reinforcement (13, 15) of the drive ring (1) which is arranged at a side or half of the drive ring (1) facing away from the diagonal bar (4).

5. Electromechanical motor according to Claim 4, in which the length of the tension-compression rod (6a) arranged between drive ring (1) and diagonal bar (4) in parallel with the other effective direction is smaller than the distance between the two tension-compression rods (3a, 3b) arranged in parallel with the one effective direction.

6. Electromechanical motor according to one of Claims 1 to 5, in which the diagonal bar (4) consists of a center piece arranged approximately in parallel with the other effective direction, and of end sections which are angled away toward the center piece, the end sections being angled away with the same sense of rotation so that the ends of the diagonal bar (4) are approximately diametrically opposite to one another.

7. Electromechanical motor according to one of Claims 1 to 6, in which the fixing element (12) which links the tension-compression rod (6b), arranged in parallel with the other effective direction and extending along the side of the diagonal bar (4) facing away from the drive ring (1), is secured to an approximately rectangular mechanically rigid frame part (8).

8. Electromechanical motor according to Claim 7, in which the frame part (8) is constructed as a housing part of the stepper drive.

9. Electromechanical motor according to one of Claims 1 to 8, in which the fixing element which links the tension-compression rod (6a), arranged in parallel with the other effective direction and extending along the side of the diagonal bar (4) facing toward the drive ring (1), is integrated in a bottom element (18) and/or lid (20) of a housing of the stepper drive, the end of the tension-compression rod (6a) provided for linkage to the fixing element being provided with an end piece (7) connected to the fixing element.

10. Electromechanical motor according to one of Claims 1 to 9, the two electromechanical drive elements (19a, 19b) of which are bending actuators, preferably piezoelectric bending actuators.

11. Electromechanical motor according to Claim 4 and 10, in which in each case a tension-compression rod (11a, 11b) arranged in parallel with the one or respectively, other effective direction and extending along one side (14) or half of the drive ring (1) is linked to the reinforcements (13, 15) on the drive ring (1), which tension-compression rod (11a, 11b) in each case exhibits toward its two ends a flexure hinge (5) and to the end of which, facing away from the reinforcement (13, 15), in each case the moving end of a bending actuator (19a, 19b) arranged perpendicularly to the respective tension-compression rod (11a, 11b), extending along one side (14) or half of the drive ring (1), is coupled.

12. Electromechanical motor according to Claim 10 or 11, in which at least the frame part (8), the drive ring (1), the tension-compression rods (3a, 3b, 6a, 6b, 11a, 11b) and the diagonal bar (4) form a drive module fabricated in one piece in plastic injection-molding technique, the bending actuators (19a, 19b) also being injected into the drive module.

13. Electromechanical motor according to one of Claims 1 to 12, in which an approximately cuboidal housing with a floor element (18) and a lid (20) is provided, a central bearing block (28) with a support surface (27) and with a first bearing bore (26) being provided in the floor element (18) and a second bearing bore (29) for the shaft (39) being provided in the lid (20) and the fixing elements (12) being arranged on the housing and secured or integrated there in such a manner that the at least one cylindrical rolling area (35) of the shaft (39) can roll in an associated rolling area (24) of an annular bore (2) of the drive ring (1).

14. Electromechanical motor according to Claim 13, in which the shaft (39) is constructed with a disk-shaped centerpiece, the first annular front face of which rests on the bearing block (28) and the surface area of which forms the cylindrical rolling area (35) of the shaft (39).

15. Electromechanical motor according to Claim 14, in which, to secure the fixing in the z direction of the axis of the shaft (39), a yoke spring (21) provided with a hole (30) for the passage of the shaft (39) is provided which is supported, on the one hand, on the second annular front face of the disk-shaped centerpiece of the shaft (39) and, on the other hand, with the lid in place, on an area of the lid in such a manner that the rotation of the shaft (39) is not significantly impeded.

16. Electromechanical motor according to one of Claims 1 to 15, in which, for the form-locked transmission of force to the inner area (24) of the annular bore (2) of the drive ring (1) and to the associated rolling area (35) of the shaft (39), a toothing, especially a cycloidal toothing, is applied.

## Revendications

1. Moteur électromécanique, notamment commande miniature pas à pas piézoélectrique, comportant:
- deux organes électromécaniques de commande (19a, 19b) ayant des directions de travail orientées approximativement perpendiculairement l'une par rapport à l'autre,
- un arbre (39) monté en rotation dans une bague de commande (1) de manière telle que la bague de commande (1) peut être sollicitée, par un déplacement des organes électromécaniques de commande (19a, 19b) dans leur direction respective de travail, pour exécuter un glissement transmis directement à l'arbre (39), si bien que l'arbre (39) pivote dans la bague de commande (1) et, de cette façon, tourne,
**caractérisé par le fait que**
- la bague de commande (1) est liée, au moyen de deux tiges de traction et compression (3a, 3b) parallèles entre elles et parallèles à l'une des deux directions de travail, lesquelles tiges comportant chacune à leurs deux extrémités une articulation (5), aux extrémités d'une tige diagonale (4), si bien que la bague de commande (1) est mobile par rapport à la tige diagonale (4) sous forme d'un cisaillement dans l'autre des deux directions de travail, et
- les extrémités diamétralement opposées de la tige diagonale (4), qui est au moins partiellement en biais par rapport aux deux directions de travail, sont liées chacune à un organe de fixation (12) au moyen d'une tige de traction et compression (6a, 6b) parallèle à l'autre direction de travail et comportant à chacune de ses deux extrémités une articulation (5), l'organe de fixation (12) de l'une des tiges (6a, 6b) et le point de liaison de l'autre tige (6a, 6b) sur la tige diagonale (4) - et inversement - se faisant face approximativement le long d'une parallèle à l'une des directions de travail, si bien que la tige diagonale (4) se déplace par rapport aux organes de fixation (12) dans ladite des deux directions de travail.

2. Moteur électromécanique selon la revendication 1, dans lequel les articulations (5) des tiges de traction et compression (3a, 3b, 6a, 6b) sont conçues en tant qu'articulation en corps solide.

3. Moteur électromécanique selon la revendication 2, dans lequel les articulations (5) en corps solide sont formées par un amincissement de la section transversale des tiges de traction et compression (3a, 3b, 6a, 6b) sur une courte longueur.

4. Moteur électromécanique selon l'une des revendications 1 à 3, dans lequel les tiges de traction et compression (3a, 3b) disposées parallèlement à l'une des directions de travail sont placées le long de deux côtés (14) ou moitiés de la bague de commande (1) se faisant face et sont liées chacune à un renforcement (13, 15) de la bague de commande (1) ménagé sur un côté opposé à la tige diagonale (4) ou sur une moitié de la bague de commande (1) opposée à la tige diagonale (4).

5. Moteur électromécanique selon la revendication 4, dans lequel la longueur de la tige de traction et compression (6a) placée entre la bague de commande (1) et la tige diagonale (4) et parallèle à l'autre direction de travail est plus petite que la distance entre les deux tiges de traction et compression (3a, 3b) placées parallèlement à l'une des deux directions de travail.

6. Moteur électromécanique selon l'une des revendications 1 à 5, dans lequel la tige diagonale (4) se compose d'une partie centrale disposée approximativement en parallèle à l'autre direction de travail et de parties terminales coudées par rapport à la partie centrale, les parties terminales étant coudées dans le même sens de rotation, si bien que les extrémités de la tige diagonale (4) se font approximativement réciproquement face d'une façon diamétrale.

7. Moteur électromécanique selon l'une des revendications 1 à 6, dans lequel l'organe de fixation (12), qui lie la tige de traction et compression (6b) disposée parallèlement à l'autre direction de travail et se trouvant le long du coté de la tige diagonale (4) opposé à la bague de commande (1), est fixé à une partie d'un cadre (8) approximativement rectangulaire et mécaniquement rigide.

8. Moteur électromécanique selon la revendication 7, dans lequel la partie de cadre (8) est conçue comme partie du boîtier de la commande pas à pas.

9. Moteur électromécanique selon l'une des revendications 1 à 8, dans lequel l'organe de fixation, qui lie la tige de traction et compression (6a) disposée parallèlement à l'autre direction de travail et se trouvant le long du coté de la tige diagonale (4) tourné vers la bague de commande (1), est intégré dans un élément du fond (18) et/ou dans un couvercle (20) d'un boîtier de la commande pas à pas, où l'extrémité de la tige de traction et compression (6a) prévue pour la liaison à l'organe de fixation est dotée d'une pièce terminale (7) liée à l'organe de fixation.

10. Moteur électromécanique selon l'une des revendications 1 à 9, dont les deux organes électromécaniques de commande (19a, 19b) sont des convertisseurs de flexion, de préférence des convertisseurs piézoélectriques de flexion.

11. Moteur électromécanique selon la revendication 4 et 10, dans lequel, sur chacun des renforcements (13, 15) de la bague de commande (1), est liée une tige de traction et compression (11a, 11b) disposée parallèlement à l'une et, respectivement, à l'autre direction de travail et se trouvant le long d'un côté (14) ou d'une moitié de la bague de commande (1), où ladite tige de traction et compression comporte à ses deux extrémités une articulation en corps solide (5) et où, à chaque extrémité opposée au renforcement (13, 15), est couplée l'extrémité mobile d'un convertisseur de flexion (19a, 19b) placé perpendiculairement à la tige de traction et compression (11a, 11b) respective, le long d'un côté (14) ou d'une moitié de la bague de commande (1).

12. Moteur électromécanique selon la revendication 10 ou 11, dans lequel au moins la partie de cadre (8), la bague de commande (1), les tiges de traction et compression (3a, 3b, 6a, 6b, 11a, 11b) et la tige diagonale (4) constituent un module de commande fabriqué en une seule pièce en moulage par injection de matière plastique, les convertisseurs de flexion (19a, 19b) étant moulés en même temps par injection dans le module de commande.

13. Moteur électromécanique selon l'une des revendications 1 à 12, dans lequel il est prévu un boîtier approximativement parallélépipédique comportant un élément de fond (18) et un couvercle (20), où il est prévu, dans l'élément de fond (18), un bloc central (28) de support avec une surface d'appui (27) et un premier alésage (26) servant de palier et, dans le couvercle (20), un deuxième alésage (29) servant de palier à l'arbre (39) et où les organes de fixation (12) sont placés sur le boîtier et y sont fixés ou intégrés de manière telle que la au moins une surface cylindrique (35) de roulement de l'arbre (39) peut tourner dans une surface (24) de roulement correspondante d'un alésage annulaire (2) de la bague de commande (1).

14. Moteur électromécanique selon la revendication 13, dans lequel l'arbre (39) est conçu avec une partie centrale en forme de disque dont la première surface annulaire de tranche s'applique sur le bloc support (28) et dont la surface de révolution forme la surface cylindrique de roulement (35) de l'arbre (39).

15. Moteur électromécanique selon la revendication 14, dans lequel, pour protéger la fixation dans la direction z de l'axe de l'arbre (39), il est prévu un ressort en anse de panier (21) doté d'un trou (30) pour laisser passer l'arbre (39), ledit ressort en anse de panier s'appuyant, d'une part, sur la deuxième surface annulaire de tranche de la partie centrale en forme de disque de l'arbre (39) et, d'autre part, lorsque le couvercle est en place, sur une surface du couvercle de manière telle que la rotation de l'arbre (39) n'est pas gênée d'une façon sensible.

16. Moteur électromécanique selon l'une des revendications 1 à 15, dans lequel, pour la transmission des forces par embrayage, un engrenage, et notamment un engrenage cycloïdal, est ménagé sur la surface intérieure (24) de l'alésage annulaire (2) de la bague de commande (1) et sur la surface de roulement (35) correspondante de l'arbre (39).
